# EUROPÄISCHE PATENTANMELDUNG

(11) **EP 1 767 295 A2**
(43) Veröffentlichungstag der Anmeldung: **28.03.2007**
(21) Anmeldenummer: 06121068.8
(22) Anmeldetag: 21.09.2006
(51) Int. Cl.: B23B 29/034

(54) **Zerspanungswerkzeug mit Feinstverstellung**

(30) Priorität: 23.09.2005 DE 102005045752
(71) Anmelder: Sandvik Intellectual Property AB, 811 81 Sandviken (SE)
(72) Erfinder: Frank, Peter, 98593, Floh-Seligenthal (DE); Neumann, Jens, 98590, Wernshausen (DE)
(74) Vertreter: Seiffert, Klaus

(57) **Zusammenfassung**

Die vorliegende Erfindung betrifft ein Zerspanungswerkzeug mit einem Werkzeuggrundkörper (1) und einem relativ dazu bewegbarem Werkzeugträger (2) zur Aufnahme einer Schneidplatte (10), wobei der Werkzeugträger (2) eine Gewindebohrung aufweist, die mit einem ersten Gewinde einer Antriebswelle (15,16) derart zusammenwirkt, daß durch Drehen der Antriebswelle (15,16) der Werkzeugträger (2) relativ zum Werkzeuggrundkörper (1) bewegt werden kann. Um ein Zerspanungswerkzeug bereitzustellen, dessen Werkzeugträger (2) relativ zum Werkzeuggrundkörper (1) sehr exakt eingestellt werden kann und das zu dem in der Herstellung kostengünstig ist, wird erfindungsgemäß vorgeschlagen, daß die Antriebswelle (15,16) ein zweites Gewinde aufweist, das in einer Gewindebohrung im Werkzeuggrundkörper (1) angeordnet ist, wobei sich die beiden Gewinde in ihrer Steigung und/oder Drehrichtung unterscheiden.

## Beschreibung

Die vorliegende Erfindung betrifft ein Zerspanungswerkzeug mit einem Werkzeuggrundkörper und einem relativ dazu bewegbarem Werkzeugträger zur Aufnahme einer Schneidplatte, wobei der Werkzeugträger eine Gewindebohrung aufweist, die mit einem Gewinde einer Antriebswelle derart zusammenwirkt, daß durch Drehen der Antriebswelle der Werkzeugträger relativ zum Werkzeuggrundkörper bewegt werden kann.

Solche Zerspanungswerkzeuge sind seit langem bekannt. Beispielweise ist ein Ausbohrwerkzeug mit einem Werkzeuggrundkörper bekannt, an dessen Stirnseite ein, relativ zum Werkzeuggrundkörper einstellbarer Werkzeugträger vorgesehen ist, wobei der Werkzeugträger in radialer Richtung bewegbar ist. Der Werkzeugträger tritt hier mit einer im Werkzeuggrundkörper gelagerten Antriebswelle über ein Gewinde in Eingriff, so daß durch Drehen der Antriebswelle der Werkzeugträger in radialer Richtung hin und her bewegt werden kann. Da der Werkzeugträger im Gebrauch eine entsprechende Schneidplatte trägt, kann mit Hilfe der Antriebswelle der Bohrradius des Ausbohrwerkzeuges eingestellt werden.

Für viele Anwendungsfälle wird eine sehr exakte Einstellung des Werkzeugträgers relativ zum Werkzeuggrundkörper gewünscht. Bei den bekannten Zerspanungswerkzeugen ist daher das Gewinde der Antriebswelle und das korrespondierende Gewinde am Werkzeuggrundkörper häufig als Feingewinde ausgeführt.

Grundsätzlich sind Feingewinde um so aufwendiger herzustellen, je feiner sie ausgebildet sind. Darüber hinaus sind Steigungen von mehr als 0,25 mm pro Umdrehung üblich. Feinere Gewinde sind praktisch kaum ausführbar und nur mit extrem hohen Aufwand überhaupt zu verwirklichen.

Für manche Anwendungsfälle kann daher das Vorsehen eines Feingewindes mit einer Steigung von nur 0,25 mm pro Umdrehung noch zu grob sein, um in einfacher Weise eine exakte Einstellung des Werkzeugträgers relativ zum Werkzeuggrundkörper zu gewährleisten.

Ausgehend von diesem Stand der Technik ist es daher Aufgabe der Erfindung, ein Zerspanungswerkzeug bereitzustellen, dessen Werkzeugträger relativ zum Werkzeuggrundkörper sehr exakt eingestellt werden kann und das zu dem in der Herstellung kostengünstig ist.

Diese Aufgabe wird erfindungsgemäß dadurch gelöst, daß die Antriebswelle ein zweites Gewinde aufweist, das mit einem entsprechenden Gewinde im Werkzeuggrundkörper zusammen wirkt, wobei sich die beiden Gewinde der Antriebswelle in ihrer Steigung und/oder Drehrichtung unterscheiden.

Durch diese Maßnahme kommt es beim Drehen der Antriebswelle zu einer translatorischen Bewegung der Antriebswelle gegenüber dem Werkzeuggrundkörper. Die Relativbewegung des Werkzeugträgers zum Werkzeuggrundkörper wird daher durch die Addition der Relativbewegungen zwischen Werkzeugträger und Antriebswelle einerseits und zwischen Antriebswelle und Werkzeuggrundkörper andererseits bestimmt. Wird beispielweise das erste Gewinde der Antriebswelle mit einer Steigung von 0,35 mm pro Umdrehung und das zweite Gewinde mit einer Steigung von 0,5 mm pro Umdrehung ausgestaltet, so ist bei gleicher Drehrichtung der beiden Gewinde die effektive Relativbewegung des Werkzeugträgers zum Werkzeuggrundkörper 0,15 mm (0,5 - 0,35) pro Umdrehung. Dies liegt daran, daß sich die Antriebswelle relativ zu dem Grundkörper um 0,5 mm pro Umdrehung bewegt, der Werkzeugträger sich jedoch relativ zur Antriebswelle um 0,35 mm pro Umdrehung in die entgegengesetzte Richtung bewegt.

Ob gleich beide Gewinde nicht in der feinst möglichen Ausführung ausgestaltet sind, wird dennoch ein deutlich feiner einstellbarer Zustellung des Werkzeugträgers relativ zum Werkzeuggrundträger erreicht.

Mit Vorteil hat das erste Gewinde und/oder das zweite Gewinde eine Steigung zwischen 0,15 mm und 0,5 mm pro Umdrehung, wobei die Relativbewegung zwischen Werkzeuggrundkörper und Werkzeugträger bei gleichem Drehen durch die Differenz zwischen den beiden Steigungen festgelegt wird.

Grundsätzlich können die Gewinde der Antriebswelle als Innen- oder Außengewinde ausgebildet sein. Es hat sich jedoch gezeigt, daß eine Ausführungsform, bei der der Werkzeugträger eine Schieberhülse aufweist, wobei die Schieberhülse in einer Bohrung im Werkzeuggrundkörper aufgenommen ist und ein Innengewinde aufweist, das mit dem ersten Gewinde der Antriebswellen in Eingriff tritt, einfacher herzustellen ist. Mit anderen Worten ist das erste Gewinde der Antriebswelle mit Vorteil ein Außengewinde.

Um ein Verdrehen der Schieberhülse innerhalb der Bohrung im Werkzeuggrundkörper zu verhindern, ist eine Verdrehsicherung vorgesehen. Dazu könnte die Bohrung beispielweise einen axial zur Bohrungsachse verlaufenden, rippenförmigen Vorsprung aufweisen, der in eine entsprechende Nut der Schieberhülse eintritt.

Die Antriebswelle weist in einer weiteren bevorzugten Ausführungsform einen Innenmehrkant, vorzugsweise einen Innensechskant zum Drehen der Antriebswelle um ihre Achse auf.

Des weiteren ist in einer besonders bevorzugten Ausführungsform vorgesehen, daß die Antriebswelle ein Spindelelement und der Werkzeuggrundkörper eine Führungsfläche aufweist, wobei das Spindelelement mindestens zwei Ausnehmungen aufweist und die Führungsfläche einen Vorsprung aufweist, der bei entsprechender Einstellung des Spindelelements in eine Ausnehmung eingreift und dadurch eine Position festlegt. Das Spindelelement ist hierbei fest mit der Antriebswelle verbunden, so daß ein Drehen der Antriebswelle ein Drehen des Spindelementes bewirkt. Durch die Ausnehmungen kann eine exakte Position der Antriebswelle in Bezug auf den Werkzeuggrundkörper festgelegt werden. Die Antriebswelle wird zusammen mit dem Spindelelement so lange bewegt, bis der Vorsprung der Führungsfläche des Werkzeuggrundkörpers in der Ausnehmung im Spindelelement einrastet. Mit Vorteil ist die Ausnehmung und der Vorsprung derart ausgebildet, daß bei der manuellen Betätigung der Antriebswelle das Einrasten bemerkt, d.h. "gespürt" wird.

Es versteht sich, daß Ausnehmungen und Vorsprung auch ihre Position vertauschen können, so daß die Ausnehmungen in der Führungsfläche vorgesehen sind, während das Spindelelement einen entsprechenden Vorsprung aufweist.

Der Vorsprung wird in einer besonders bevorzugten Ausführungsform durch ein federnd vorgespanntes Druckstück gebildet.

Weiterhin hat sich gezeigt, daß das Spindelelement am besten aus einem Spindelrad besteht, an dessen Außenkante eine Mehrzahl von die Ausnehmungen bildeten Rillen vorgesehen sind.

Weitere Vorteile, Merkmale und Anwendungsmöglichkeiten der vorliegenden Erfindung werden deutlich anhand der folgenden Beschreibung einer bevorzugten Ausführungsform sowie der dazugehörigen Figuren. Es zeigen:
- Figur 1: eine Ansicht von unten auf einen Ausbohrkopf gemäß einer Ausführungsform der Erfindung,
- Figur 2: eine Seitenansicht auf das Ausbohrwerkzeug von Figur 1,
- Figur 3: ein Schnitt entlang der Linie A-A in Figur 1,
- Figur 4: eine Schnittansicht entlang der Linie B-B in Figur 3 und
- Figur 5: eine Ausschnittvergrößerung von Figur 4.

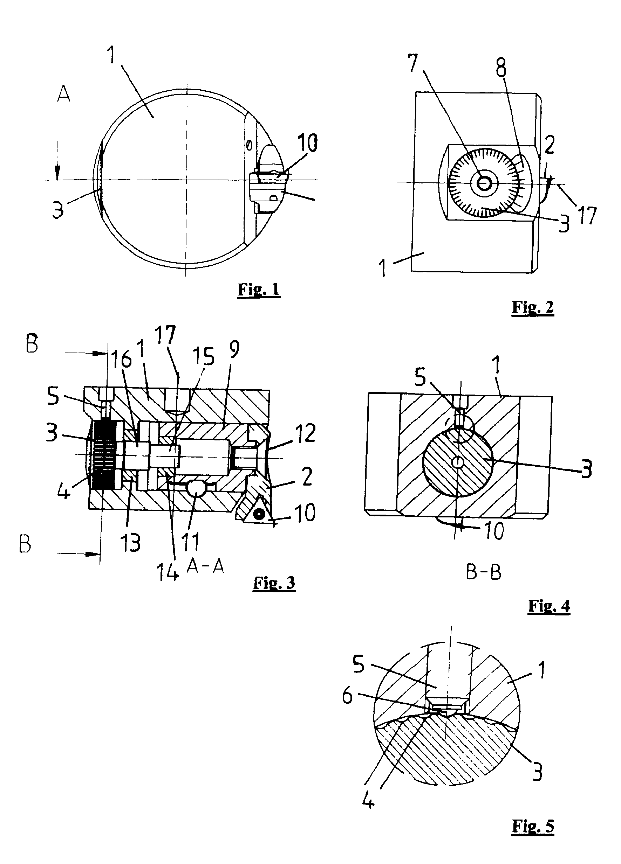

In Figur 1 ist ein Ausbohrkopf von unten dargestellt. Der Ausbohrkopf weist ein Werkzeuggrundkörper 1 auf, der hier im wesentlichen zylindrisch ausgeführt ist. Im Betrieb rotiert der Ausbohrkopf um seine Zylinderachse 17. An dem Werkzeuggrundkörper 1 ist der Werkzeugträger befestigt, der die Schneidplatte 10 trägt, welche im Betrieb mit dem zu bearbeitenden Werkstück in Eingriff tritt. Weiterhin ist in Figur 1 das als Spindelrad ausgeführte Spindelelement 3 zu erkennen. Der Werkzeugträger 2 kann in radialer Richtung, d.h. in Figur 1 nach links oder rechts relativ zum Werkzeuggrundkörper 1 eingestellt werden.

Figur 2 zeigt eine seitliche Teilansicht auf das Ausbohrwerkzeug von Figur 1. Zu erkennen ist der Werkzeuggrundkörper 1, ein Teil des Werkzeugträgers 2 sowie das Spindelrad 3. Die Rotationsachse 17 verläuft senkrecht zur Achse des Spindelrads 3. Das Spindelrad 3 hat einen Innensechskant, mit dessen Hilfe das Spindelrad 3 mit der in Figur 2 nicht gezeigten Antriebswelle bewegt werden kann, um den Werkzeugträger 2 in radialer Richtung einzustellen. Deutlich zu erkennen ist des weiteren, daß das Spindelrad 3 eine Hauptskala 7 aufweist, die mit einer entsprechenden Noniusskala 8 am Werkzeugträger zusammenarbeitet. Die Skalen dienen zur exakten Einstellung des Werkzeugträgers 2 relativ zum Werkzeuggrundkörper 1.

In Figur 3 ist eine Schnittansicht entlang der Linie A-A von Figur 1 gezeigt. Man erkennt die Schneidplatte 10, die mit dem Werkzeugträger 2 versehen ist. Genaugenommen ist der Werkzeugträger 2 hier zweiteilig ausgeführt und besteht aus dem der Schneidplatte 10 haltenden Teil 2 sowie der Schieberhülse 9. Das die Schneidplatte 10 haltende Teil 2 ist mit Hilfe der Befestigungsschraube 12 an der Schieberhülse 9 befestigt. Die Schieberhülse 9 ist in einer Bohrung im Werkzeuggrundkörper 1 aufgenommen. Um ein Verdrehen der Schieberhülse 9 innerhalb der Bohrung im Grundkörper 1 zu verhindern, ist eine Verdrehsicherung 11 vorgesehen.

Weiterhin weist die Schieberhülse 9 eine Buchse 14 mit Innengewinde auf. In gleicher Weise ist eine Buchse 13 innerhalb des Werkzeugrundkörpers 1 ebenfalls mit Innengewinde vorgesehen. Das Spindelrad 3 ist mit einer Antriebswelle 15, 16 verbunden, die hier aus zwei Abschnitten mit unterschiedlichen Außendurchmessern 15, 16 besteht. Der Abschnitt 15 der Antriebswelle weist ein Außengewinde auf, das mit dem Innengewinde der Buchse 14 in Eingriff tritt. Analog dazu hat der Abschnitt 16 der Antriebswelle ein Außengewinde, das mit dem Innengewinde der Buchse 13 in Eingriff tritt.

Das Besondere an der Antriebswelle 15, 16 ist, daß sie zwei unterschiedliche Gewinde aufweist, die sich in ihrer Steigung und/oder ihrer Drehrichtung unterscheiden. Wird nun beispielsweise das Spindelrad 3 im Uhrzeigersinn gedreht, so führt dies dazu, daß sich die gesamte Antriebswelle 15, 16 auf Grund des Eingriffes mit dem Innengewinde der Buchse 13 von links nach rechts, d.h. in das Werkzeug hinein bewegt. Da gleichzeitig die Schieberhülse 9 über das Gewinde zwischen Buchse 14 und Abschnitt 15 der Antriebswelle mit der Antriebswelle verbunden ist, bewegt sich die Schieberhülse 9 relativ zur Antriebswelle 15, 16 nach links, d.h. in das Werkzeug hinein. Hat beispielweise das Gewinde an der Buchse 13 des Werkzeuggrundkörpers 1 eine Steigung von 0,3 mm pro Umdrehung und das Gewinde an der Buchse 14 der Schieberhülse 9 eine Steigung von 0,25 mm pro Umdrehung, so bewirkt eine volle Umdrehung des Spindelrads 3 bzw. der Antriebswelle 15, 16 eine relative Bewegung zwischen Schieberhülse 9 und Grundkörper 1 um nur 0,05 mm.

Weiterhin ist zu erkennen, daß das Spindelrad 3 an seinem Außenumfang eine Reihe von Rillen 4 aufweist. Weiterhin ist in dem Werkzeuggrundkörper 1 ein federndes Druckstück 5 angeordnet, das mit den Rillen 4 des Spindelrads 3 in Eingriff tritt. Dies wird deutlicher anhand der Figuren 4 und 5. Figur 4 zeigt eine Schnittansicht entlang der Linie B-B von Figur 3. Hier ist das Spindelrad 3 mit der Außenriffelung sowie das federnde Druckstück 5 zu erkennen.

Figur 5 zeigt eine Detailvergrößerung. Das federnde Druckstück 5, das radial zur Spindelelementachse orientiert ist, weist eine federnd vorgespannte Kugel 6 auf, die in die Rillen 4 des Spindelelementes 3 eingreift. Wird nun das Spindelrad 3 bewegt, so taucht die federnd vorgespannte Kugel 6 nacheinander in die entsprechenden Rillen 4 ein, so daß beim manuellen Einstellen des Spindelrads 3 ein entsprechend fühlbarer Widerstand vorhanden ist, so daß gezielt der Werkzeugträger 2 und damit die Schneidplatte 10 um einen bestimmten Weg in radialer Richtung verschoben werden kann, in dem beispielweise das Spindelrad 3 um eine bestimmte Anzahl von "Klicks", d.h. um eine bestimmte Anzahl von Ausnehmungen gedreht wird.

Durch die erfindungsgemäße Ausgestaltung der Antriebswelle kann die Schneidplatte sehr exakt eingestellt werden.

### Bezugszeichenliste

- 1: Werkzeuggrundkörper
- 2: Werkzeugträger
- 3: Spindelelement
- 4: Rillen
- 5: federndes Druckstück
- 6: Kugel
- 7: Hauptskala
- 8: Noniusskala
- 9: Schieberhülse
- 10: Schneidplatte
- 11: Verdrehsicherung
- 12: Befestigungsschraube
- 13: Buchse
- 14: Buchse
- 15: Antriebswelle
- 16: Antriebswelle
- 17: Zylinderachse

## Patentansprüche

1. Zerspanungswerkzeug mit einem Werkzeuggrundkörper (1) und einem relativ dazu bewegbarem Werkzeugträger (2) zur Aufnahme einer Schneidplatte (10), wobei der Werkzeugträger (2) eine Gewindebohrung aufweist, die mit einem ersten Gewinde einer Antriebswelle (15, 16) derart zusammenwirkt, daß durch Drehen der Antriebswelle (15, 16) der Werkzeugträger (2) relativ zum Werkzeuggrundkörper (1) bewegt werden kann, **dadurch gekennzeichnet, daß** die Antriebswelle (15, 16) ein zweites Gewinde aufweist, das in einer Gewindebohrung im Werkzeuggrundkörper (1) angeordnet ist, wobei sich die beiden Gewinde in ihrer Steigung und/oder Drehrichtung unterscheiden.

2. Zerspanungswerkzeug nach Anspruch 1, **dadurch gekennzeichnet, daß** das erste Gewinde eine Steigung zwischen 0,15 und 0,5 mm pro Umdrehung hat.

3. Zerspanungswerkzeug nach Anspruch 1 oder 2, **dadurch gekennzeichnet, daß** das zweite Gewinde eine Steigung zwischen 0,15 und 0,5 mm pro Umdrehung hat.

4. Zerspanungswerkzeug nach einem der Ansprüche 1 bis 3, **dadurch gekennzeichnet, daß** der Werkzeugträger eine Schieberhülse (9) aufweist, wobei die Schieberhülse (9) in einer Bohrung im Werkzeuggrundkörper (1) aufgenommen ist und ein Innengewinde aufweist, das mit dem ersten Gewinde der Antriebswelle (15, 16) in Eingriff tritt.

5. Zerspanungswerkzeug nach Anspruch 4, **dadurch gekennzeichnet, daß** eine Verdrehsicherung (11) vorgesehen ist, die ein Verdrehen der Schieberhülse (9) innerhalb der Bohrung im Werkzeuggrundkörper (1) verhindert.

6. Zerspanungswerkzeug nach einem der Ansprüche 1 bis 5, **dadurch gekennzeichnet, daß** die Antriebswelle (15, 16) einen Innenmehrkant, vorzugsweise einen Innensechskant zum Drehen der Antriebswelle (15, 16) um ihre Wellenachse aufweist.

7. Zerspanungswerkzeug nach einem der Ansprüche 1 bis 6, **dadurch gekennzeichnet, daß** die Antriebswelle (15, 16) ein Spindelelement (3) und der Werkzeuggrundkörper (1) eine Führungsfläche aufweist, wobei das Spindelement (3) mindestens zwei Ausnehmungen aufweist und die Führungsfläche einen Vorsprung aufweist, der bei entsprechender Einstellung des Spindelelements (3) in eine Ausnehmung eingreift und **dadurch** eine Position festlegt.

8. Zerspanungswerkzeug nach einem der Ansprüche 1 bis 6, **dadurch gekennzeichnet, daß** die Antriebswelle (15, 16) ein Spindelelement (3) und der Werkzeuggrundkörper (1) eine Führungsfläche aufweist, wobei die Führungsfläche mindestens zwei Ausnehmungen aufweist und das Spindelelement (3) einen Vorsprung aufweist, der bei entsprechender Einstellung des Spindelelements (3) in eine Ausnehmung eingreift und **dadurch** eine Position festlegt.

9. Zerspanungswerkzeug nach Anspruch 7 oder 8, **dadurch gekennzeichnet, daß** der Vorsprung durch ein federnd vorgespanntes Druckstück (5) gebildet wird.

10. Zerspanungswerkzeug nach Anspruch 7 oder 9, **dadurch gekennzeichnet, daß** das Spindelelement (3) aus einem Spindelrad (7) besteht, an dessen Aussenkante eine Mehrzahl von die Ausnehmungen bildenden Rillen vorgesehen sind.
